# EUROPEAN PATENT APPLICATION

(11) **EP 4 751 945 A1**
(43) Date of publication of application: **03.06.2026**
(21) Application number: 25217171.5
(22) Date of filing: 20.11.2025
(51) Int. Cl.: B60G 11/08, B60G 11/42

(54) **IMPROVED SUSPENSION SYSTEM**

(30) Priority: 28.11.2024 IT 202400026928
(71) Applicant: IVECO S.P.A., 10156 Torino (IT)
(72) Inventor: DAL COL, Vittorio, 10156 TORINO (IT); MENICHELLI, Marco Fabio Antoni, 10156 TORINO (IT)
(74) Representative: Studio Torta S.p.A.

(57) **Abstract**

Suspension system (3) for a chassis (2) of a vehicle extending along a longitudinal axis (A), the suspension system (3) comprising an elastic element (4) extending along a transverse axis (B) transversal to the longitudinal axis (A) and comprising an intermediate portion (4') and a pair of end portions (4") along the transverse axis (B), the suspension system (3) further comprising a connection system (5) configured to connect the end portions (4'') to respective first and second elements (2') of the chassis (2), the connection system (5) connecting the ends (4'') so as to vary the contact distance of the elastic element (4) as a function of the load acting on it.

## Description

### CROSS-REFERENCE TO RELATED APPLICATIONS

This patent application claims priority from Italian patent application no. 102024000026928 filed on November 28, 2024, the entire disclosure of which is incorporated herein by reference.

### TECHNICAL FIELD

The present invention relates to a suspension system, in particular a suspension system for a commercial vehicle.

The present invention is preferably, but not exclusively, applicable to a suspension system for commercial vehicles. Reference will be made to this application in the description below by way of example.

### BACKGROUND ART

The advantages of suspensions that use as elastic element a transverse leaf spring, in particular when this also performs the function of anti-roll element, are known.

This function is obtained, for example, with the leaf spring ends connected to the arms (lower and upper) for connection between chassis and wheel side and with two central connection points, spaced in transverse direction, between leaf spring and chassis.

The anti-roll effect depends on the contact distance of the central connections, produced by means of suitable dowels, on their characteristics and on the section (width and height) of the leaf spring along the whole of its length.

It is known that with appropriate sizing of the aforesaid parameters, the anti-roll bar can be completely eliminated, thereby producing suspensions, both according to the McPherson strut configuration, and according to the double wishbone configuration, characterised by reduced size, weight and cost.

However, despite the aforesaid advantages, particularly appreciated on some categories of vehicle, the use of coil springs in suspensions makes it possible, with limited complications and increases in cost, to obtain elastic properties that improve vehicle comfort (in particular when the vehicle has no load) and at the same time reduce maximum wheel travel.

These characteristics cause an increasing stiffness of the elastic element, which, in the case of coil springs, is easily obtainable by varying pitch/thread/diameter of the helix as a function of the stiffness characteristic to be achieved.

As the use of coil springs requires, in order to obtain good dynamic behaviour of the vehicle, the use of an anti-roll bar of appropriate stiffness (resulting in an increase of costs and weight), also being characterised by high diameter size and height, they can be difficult to use on different chassis/wheel/axle configurations.

Consequently, there is the need to provide suspension systems that provide a predetermined and suitable level of stiffness in all load conditions of the vehicle in order to guarantee driver comfort.

In particular, there is the need to provide a suspension system that can be used in various chassis configurations.

The object of the present invention is to satisfy the aforesaid needs in an optimised and economical way.

### SUMMARY OF THE INVENTION

The aforesaid object is achieved by a suspension system, a vehicle system and a vehicle as claimed in the appended claims, which are an integral part of the present description.

### BRIEF DESCRIPTION OF THE DRAWINGS

For a better understanding of the present invention a preferred embodiment is described below, by way of nonlimiting example and with reference to the accompanying drawings, wherein:
- Fig. 1 is a perspective view of a suspension system according to the invention applied to an example of vehicle chassis;
- Figs. 2A and 2B are partially sectioned schematic side views of two configurations of the suspension system of Fig. 1;
- Figs. 3, 4 and 5 are perspective views in section according to different angles of a portion of the suspension system of Fig. 1; and
- Fig. 6 illustrates a graph with the stiffness value of an elastic element of the suspension according to the invention when the contact distance of the supports of the elastic element varies.

### DETAILED DESCRIPTION OF THE INVENTION

In the accompanying figures, the reference number 1 indicates a vehicle assembly comprising a chassis 2 and a suspension system 3 configured to suspend a mass, such as an axle or wheels, with respect to said chassis 2.

In particular, the illustrated portion of the chassis 2 and the suspension 3 are relative to a front portion of a vehicle with respect to a longitudinal axis A thereof, considering a condition of normal forward movement of the vehicle.

In the example of embodiment illustrated, the chassis 2 comprises a first longitudinal element 2' , a second longitudinal element 2'' extending along the longitudinal axis A and in particular parallel to each other and at least one transverse element 2‴ for joining the two extending along the transverse axis B.

The suspension system 3 essentially comprises an elastic element 4 extending along a transverse axis B transversal to the longitudinal axis A and operatively connected to the chassis 2 as described below.

The elastic element 4 comprises a central portion 4' and a pair of end portions 4" extending from opposite sides of the central portion 4 along the transverse axis B.

In detail, the elastic element 4 comprises a laminated spring, in detail a leaf spring. Advantageously, as illustrated, the leaf spring has a substantially rectangular section and defines an upper surface and a lower surface with respect to a vertical axis C perpendicular to the aforesaid axes A, B.

The elastic element 4 is connected to the chassis 2 by means of a connection system 5. In detail, this connection system 5 is interposed between the ends 4'' of the elastic element 4 and the chassis 2, in particular between the ends 4'' and the first and second longitudinal elements 2', 2".

In detail, the connection system 5 is configured to connect the elastic element 4 to the chassis 2 above it, i.e., on the opposite side from the ground, along the vertical axis C.

In the suspension system 3 according to the invention the elastic element 4 is connected at the ends 4'' by means of respective elastic connection systems 5, each configured to vary the contact distance of the elastic element to the chassis 4, hence the relative stiffness of the suspension 3 as a function of the load acting on it.

In detail, contact distance is meant as the free portion of the elastic element 4 bending between the two connection systems 5, i.e., the distance between the contact points of the elastic element 4 with respect to the chassis 2.

Hereinafter, for convenience, reference will be made to a single connection system 5 as they are both made in the same way.

The connection system 5 essentially comprises a support 8, a deformable element 6 and a coupling element 7.

In detail, the support 8 is configured to define, together with the chassis 2 a through space 10 housing the elastic element 4, in particular an end portion 4'' thereof, the deformable element 6 and the coupling element 7.

In detail, the elastic element 4 is interposed between the deformable element 6 and the coupling element 7 inside the space 10.

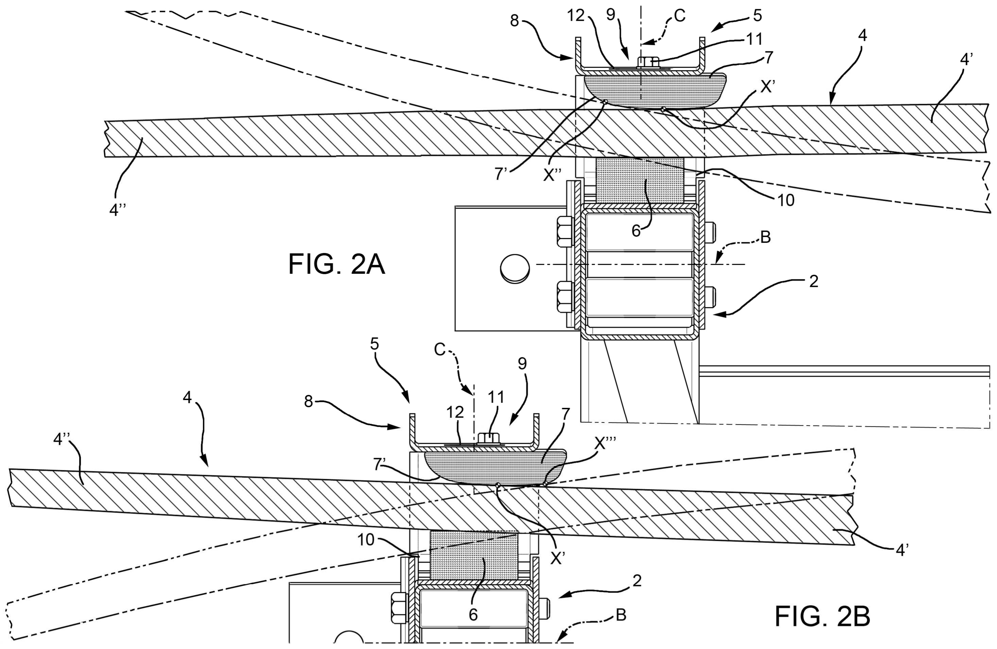

Advantageously (as shown in Figs. 2A-2B), it is interposed vertically so that the coupling element 7 is positioned vertically above it and the deformable element vertically below it, considering the ground as reference. In other words, according to the configuration described, the deformable element 6 is the closest to the chassis 2.

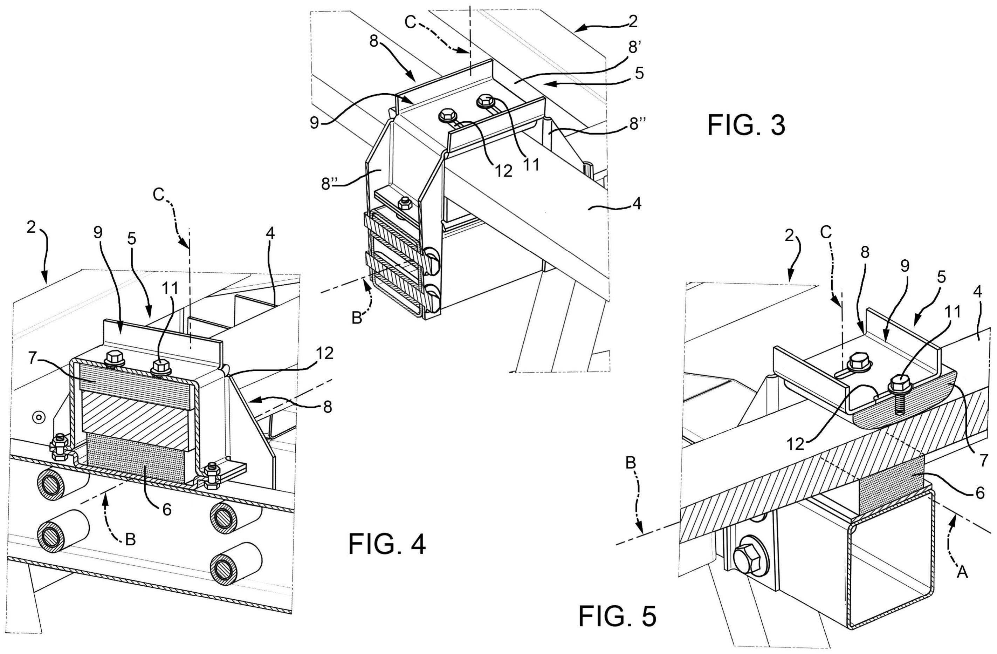

In particular, with reference to Figs. 3 to 5, the support 8 is configured as a flange and comprises a central portion 8' and a pair of lateral portions 8'' extending on the opposite side to the central portion 8' in vertical direction.

The lateral portions 8'' are configured to be connected, for example by means of threaded elements as illustrated, to the chassis 2, i.e., in the embodiment described to the longitudinal elements 2'.

In the embodiment described, as the space 10 allows the elastic element 4 to pass through, the lateral portions 8'' delimit the space 10 along the longitudinal axis A and are vertically delimited between the central portion 8' and the chassis 2.

In this way, the space 10 is substantially separated from the outside environment so as to prevent the entry of dirt between elastic element 4, deformable element 6 and coupling element 7.

Advantageously, the support 8 is made of a metallic material and in one piece, for example by means of a folded metal sheet.

In particular, the elastic element 4, i.e., one of its surfaces, upper or lower, cooperates in contact with the coupling element 7, in particular they cooperate with each other as mated profiles.

In other words, the coupling element 7 can be defined as a cam. To this end (as visible in Figs. 2A-2B), the coupling element 7 defines a shaped surface 7' of predetermined shape suitable to cooperate by contact with the upper or lower surface of the elastic element defining with it the law of variation of its stiffness.

In detail, this shaped surface 7' has a convex shape towards the elastic element 4. In the embodiment described, the shaped surface 7' has a plurality of curved portions, in particular having different radii of curvature to one another and designated to provide the aforesaid characteristic of stiffness.

In detail, a first, a second and a third curved portion are present, where the second curved portion has a larger radius of curvature with respect to the first and to the second curved portion.

This shaped profile 7' has a shape that depends on the vehicle configuration, on the expected load during operation and on the desired stiffness to be provided by means of the elastic element 4, as will be discussed below.

The deformable element 6 substantially comprises a buffer, advantageously made of a deformable material such as an elastomer, a rubber, a polyurethane or any other material, in particular plastic/polymeric materials, and suitable to be elastically compressed, maintaining the elastic element 4 in contact with the surface 7' at all times, under all load conditions expected during operation.

Advantageously, the compressible element is carried by the chassis 2, in detail it is fixed rigidly to it.

On the other hand, the coupling element 7 is carried by the support 8 in an adjustable way, i.e., it is carried in a selectively fixed way to adjust the portion of the coupling element 7 with respect to the support 8 and hence to the elastic element 4.

In particular, the suspension system 3 comprises an adjustment system 9 configured to vary the position of the coupling element 7 with respect to the support 8.

This adjustment system 9 comprises threaded elements 11 configured to cooperate in respective holes made in the coupling element 7 and be housed in guides 12 made in the support 8, in detail in the central portion 8'.

The guides 12 are advantageously openings having a shape extending along one of the aforesaid axes. In the embodiment described they are substantially rectangular in shape and extending along the transverse axis B.

Operation of the embodiment of the suspension system, of the vehicle system and of the vehicle according to the invention described above is as follows.

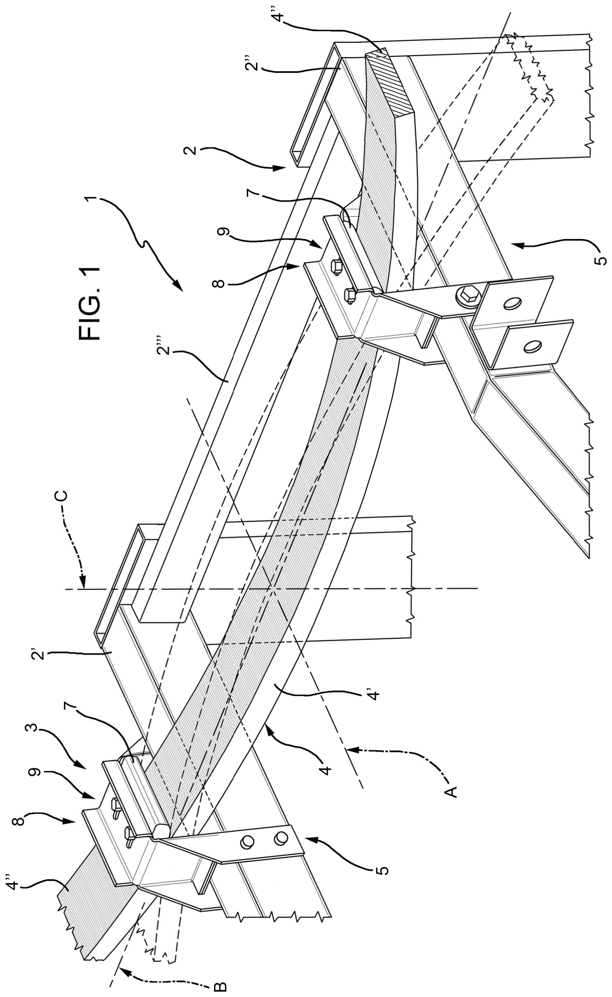

In general, as is known (Fig. 1), the elastic element is carried between the supports 8 with respect to the chassis 2 and by bending elastically supports the loads of the mass suspended with respect to the ground. In particular, the stiffness of the elastic element 4 increases as a function of variation of the contact distance between the connection systems 5.

As illustrated, for example, in Fig. 2A, in a first normal load condition, the elastic element 4 interacts with the contact element 7 in a first contact point X' defining a first value of contact distance and hence a first stiffness. In the same figure a dashed line shows a maximum load condition in which the elastic element 4 interacts with the contact element 7 in a second contact point X'' defining a maximum value of contact distance and hence a maximum stiffness.

Instead, as illustrated in Fig. 2B (in which positioning of the contact element 7 has also been changed merely as an illustrative example), in a first normal load condition, the elastic element 4 interacts with the contact element 7 in a first contact point X' defining a first value of contact distance and hence a first stiffness. In the same figure a dashed line shows a minimum load condition where the elastic element 4 interacts with the contact element 7 in a third contact point X‴ defining a minimum value of contact distance and hence a maximum stiffness.

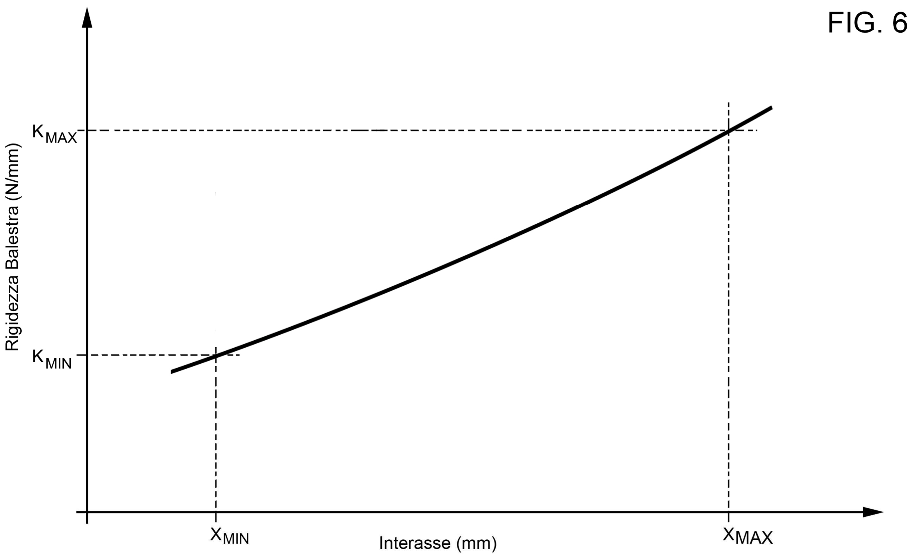

With reference to Fig. 6, the variation of stiffness is illustrated, in N/mm, as a function of the contact distance, in mm, of the elastic element 4.

As visible, thanks to the shaped profile 7' of the contact element 7, this contact distance varies and hence the varies the stiffness between a minimum contact distance Xmin that leads to a minimum stiffness Kmin and a maximum contact distance Xmax that leads to a maximum stiffness.

The range of the contact distance and hence the relative stiffness can be varied by varying both the shaped profile 7' and the position of the contact element 7 with respect to the support 8.

From the above, the advantages of a suspension system, a vehicles system and a vehicle according to the invention are evident.

With the suspension system provided it is possible to obtain a variable stiffness in a compact and economical way.

In fact, by using a normal laminated/leaf spring it is possible to obtain a variable stiffness thanks to the connection system 5, which allows a natural variation of the contact distance as a function of the load acting on it.

In particular, this variation, being guided by the shaped profile of the coupling element, is obtained in an economical, compact and precise way.

Moreover, it is possible to adjust the position of this contact element, thus producing, with the same connection system, a suspension suitable to be used with different loads and vehicle suspensions.

Further, it is possible to use this suspension system above or below the chassis, adding further versatility.

Advantageously, the stiffness can be varied, so as to maintain constant the first own frequency of the suspended masses for loads weighing on the suspension falling within the conditions of vehicle with no load and that of maximum (static) load permitted on the same.

The aforesaid is further validated by the fact that it is possible to replace the contact element with one having a different shaped profile for the same purpose, providing further versatility of use of the present suspension.

Moreover, the suspension is particularly compact and economical, as the elements are used only a few in number and of compact design.

Further, the support provided allows isolation of the space housing the end of the elastic element that cooperates with the contact element, increasing its useful life.

Finally, it is clear that modifications and variations can be made to the suspension system, to the vehicle system and to the vehicle according to the present invention, without however departing from the scope of protection defined by the claims.

For example, the materials indicated can vary according to need, as can the type of laminated/leaf spring, the support structure and the deformable element.

Moreover, the chassis can have a different shape with respect to what has been described and the elastic element can be arranged differently with respect to it.

Similarly, the adjustment system can be produced differently, just as the contact element can have a different profile with respect to the one illustrated.

## Claims

1. Suspension system (3) for a chassis (2) of a vehicle extending along a longitudinal axis (A), said suspension system (3) comprising an elastic element (4) extending along a transverse axis (B) transversal to said longitudinal axis (A) and comprising an intermediate portion (4") and a pair of end portions (4'') along said transverse axis (B), said suspension system (3) further comprising a connection system (5) configured to connect said end portions (4'') to respective first and second elements (2') of said chassis (2), said connection system (5) connecting said ends (4") so as to vary the contact distance of said elastic element (4) as a function of the load acting on it, wherein said connection system (5) comprises a support (8) defining a space (10), a contact element (7) and a deformable element (6), said elastic element (4) being housed passing through said space (10) and said contact and deformable element (7, 6) being interposed in contact with said elastic element (4) in said space (10).

2. System according to claim 1, wherein said support (8) is configured to be connected to said chassis (2), said contact and deformable element (7, 6) being interposed between said elastic element (4), said chassis and said support (8) along a vertical axis (C) perpendicular to said longitudinal and transverse axes (A, B).

3. System according to claim 2, wherein said deformable element (6) is placed vertically below said contact element (7).

4. System according to one of the previous claims, wherein said deformable element (6) is made of elastic material.

5. System according to one of the previous claims, wherein said contact element (7) defines a shaped profile (7') cooperating in contact with said elastic element (4).

6. System according to one of the previous claims, wherein said contact element (7) is a cam.

7. System according to one of the previous claims, wherein said contact element (7) is carried by said support element (8).

8. System according to claim 7, wherein said contact element (7) is carried by said support (8) in an adjustable manner along said transverse axis (B).

9. System according to one of claims 2 to 7, wherein said contact element (7) has a convex shape towards said elastic element (4).

10. System according to one of the previous claims, wherein said support (8) comprises a central portion (8') and a pair of lateral portions (8'), said lateral portions (8") being configured to be connected to said chassis (2) delimiting with it and said central portion (8') said space (10).

11. Assembly (1) of chassis (2) and suspension system (3) according to one of the previous claims.

12. Assembly according to claim 11, wherein said elastic element (4) is placed vertically above said chassis (2).

13. Vehicle comprising a chassis (2) and a suspension system according to one of claims 1 to 10.
